# EUROPÄISCHE PATENTSCHRIFT

(11) **EP 1 521 518 B1**
(45) Veröffentlichungstag und Bekanntmachung des Hinweises auf die Patenterteilung: **30.11.2016**
(21) Anmeldenummer: 03740273.2
(22) Anmeldetag: 18.06.2003
(51) Int. Cl.: A01G 9/02

(54) **PFLANZENBEHÄLTER**
PLANTER
RECIPIENT A PLANTE

(30) Priorität: 16.07.2002 DE 20210788 U
(43) Veröffentlichungstag der Anmeldung: 13.04.2005
(73) Patentinhaber: Pöppelmann Holding GmbH & Co. KG., 49393 Lohne (DE)
(72) Erfinder: ORSCHULIK, Günther, 49451 Holdorf (DE)
(74) Vertreter: Bünemann, Egon
(86) Internationale Anmeldenummer: PCT/EP2003/006428
(87) Internationale Veröffentlichungsnummer: WO 2004/006651

(56) Entgegenhaltungen:
- EP-A- 0 842 599
- DE-U- 9 105 893
- DE-U1- 9 205 936
- US-A- 2 550 602
- US-A- 3 949 524
- US-A- 3 965 616
- US-A- 4 315 382
- US-A- 4 739 581

## Beschreibung

Die Erfindung betrifft einen Pflanzenbehälter nach dem Oberbegriff des Anspruchs 1, wie er insbesondere als Blumenampel Verwendung findet, bei der der Untersatz einerseits als Wasserreservoir und andererseits als Schutz von Wohnbereichen unterhalb der Blumenampel gegen heraustropfendes Wasser dient. Grundsätzlich sind aber mit einem Topf verbindbare Untersetzer auch in anderer Weise stehend oder hängend verwendbar.

Bei herkömmlichen Pflanzentöpfen dieser Art sind Steckverbindungen in Form von Haken und Löchern vorgesehen, die ein exaktes Zusammenführen voraussetzen. Dies ist im allgemeinen dann unter Sichtkontrolle möglich, wenn der Topf noch nicht befüllt bzw. bepflanzt ist. In der Praxis ist der Erwerbsgartenbau aber in erheblichem Maße dazu übergegangen, den Topf ohne Untersetzer zu bepflanzen und die Pflanze im Topf zur Verkaufsreife aufzuziehen, um erst danach den Untersetzer zu einem verkaufsfertigen Produkt anzubringen.

Aus der DE 92 05 936 U1 ist eine Schale aus Kunststoff, z.B. zur Aufnahme einer Zierpflanze, mit einer Schüssel und einem Fuß offenbart, die jeweils für sich raumsparend zu stapeln sind und über verdeckt zwischen Schüssel und Fuß liegende Kupplungseinrichtungen zusammenzufügen sind. Die Kupplungseinrichtungen erfordern jedoch ein sorgfältiges Ausrichten der Teile zueinander und sind auch mit gegeneinander zu verhakenden Vorsprüngen und Klauen nur aufwendig zu fertigen.

Aufgabe der Erfindung ist es dementsprechend, einen Pflanzenbehälter der hier betrachteten Art so zu gestalten, dass sich der Untersetzer "blind", d.h. ohne Einblick in das Innere des Topfes mit diesem einfach verbinden lässt, wobei sich der Topf auch für ein rationelles Pflanzenaufzugsverfahren gestalten lassen muss und wobei der Untersetzer auch so fest mit dem Topf zu verbinden ist, dass dieser selbst bei starker, in den Untersetzer eindringenden Bewurzelung nicht leicht abgesprengt wird.

Gemäß der Erfindung wird diese Aufgabe mit einem Pflanzenbehälter nach dem Anspruch 1 gelöst. Die Ausbildung von Führungsflächen für ein einfaches, schnelles und sicheres Zusammenstecken schafft die Voraussetzung für eine Handhabung, bei der auch Fehler vermieden werden können, die sonst durch Fehlstecken oder auch durch störende Bewurzelung zu Fehlern und Schäden führen können. Der Übergang von einer reinen Steckbewegung zu einer Drehbewegung für den Kupplungseingriff vermittelt hohe Sicherheiten, dass die Verbindung zwischen Topf und Untersetzer nicht einfach unter dem Druck der Bewurzelung aufgeht.

Mit kegligen Führungsflächen, vorzugsweise rotationssymmetrisch auf eine zentrale Symmetrieachse des Topfes ausgerichtet, erhält sowohl das Zusammenführung wie auch das Verbinden von Topf und Untersetzer eine gemeinsame und klare Ausrichtung. Als keglige Führungsflächen können sich grundsätzlich schon der untere Topfbereich und/oder der Rand des Untersetzers anbieten, die traditionell keglig gestaltet sind und diese Grundform schon wegen der Formgebungsbedingungen und wegen der Stapelbarkeit überwiegend beibehalten haben. Allerdings wird bei Pflanzentöpfen in der Regel ein im Radius erheblich über den unteren Topfbereich hinausragender Untersetzer vorgesehen, um ein größeres Wasserreservoir und vor allem auch einen Blick auf den Wasserpegel zu ermöglichen. In solchen Fällen kommt dann eine direkte flächige Führung zwischen der Innenseite des Untersetzerrandes und der unteren Außenseite des Topfes nicht in Betracht.

Einfacher und gefälliger erscheint es, die kegligen Führungsflächen in Form eines Doms am Untersetzer und am Topf in der Mitte vorzusehen. Eine einseitige Führungsfläche könnte bereits eine entsprechende Zentrierung bewirken, wenn auf der Gegenseite passende Kontaktelemente angeordnet sind, etwa drei oder mehr im Kreis verteilte und auf eine keglige Führungsfläche aufgreifende Kontaktelemente. Vorteilhaft wird aber ein Dom mit Kegelstumpfmantel beidseitig, d.h. sowohl auf Seiten des Topfes wie auch des Untersetzers vorgesehen, so dass eine ganzflächige gleichmäßige Führungsanlage ermöglicht ist.

Nach einem so zentrierten Zusammenführen wird eine Kupplungsverbindung durch gegenseitiges Verdrehen hergestellt. Hierzu kommen grundsätzlich eine Vielzahl von gewinde- oder bajonettartigen Kupplungen in Betracht. Für spritzgussgeformte Pflanzenbehälter bieten sich insbesondere Verhakungen mit hakenförmigen Vorsprüngen auf der einen und passenden Wandausnehmungen auf der anderen Seite an.

Ausführungsbeispiele der Erfindung sind in der Zeichnung dargestellt und werden nachfolgend näher beschrieben. In der Zeichnung zeigen:
- Fig. 1: Schrägansicht eines Pflanzenbehälters mit (halbiertem) Topf und einem getrennten Untersetzer,
- Fig. 2: Schnitt durch den Pflanzenbehälter nach Fig. 1 bei an den Topf angekuppeltem Untersetzer,
- Fig. 3: vergrößertes Detail aus Fig. 2 in Schrägansicht,

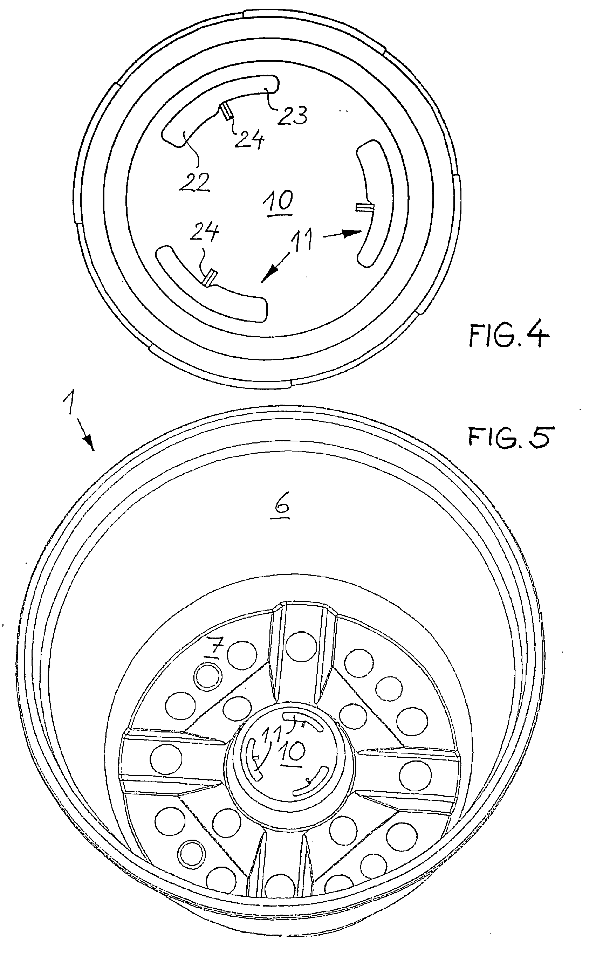

- Fig. 4: Draufsicht auf einen zentralen (Dom-)Bereich des Topfes,
- Fig. 5: Schrägansicht von oben in den Topf,
- Fig. 6: Schrägansicht eines zentralen Bereichs des Untersetzers in vergrößertem Maßstab,
- Fig. 7: Ansicht des Untersetzers von unten und
- Fig. 8: Schrägansicht auf eine abgeänderte Ausführungsform eines Untersetzers.

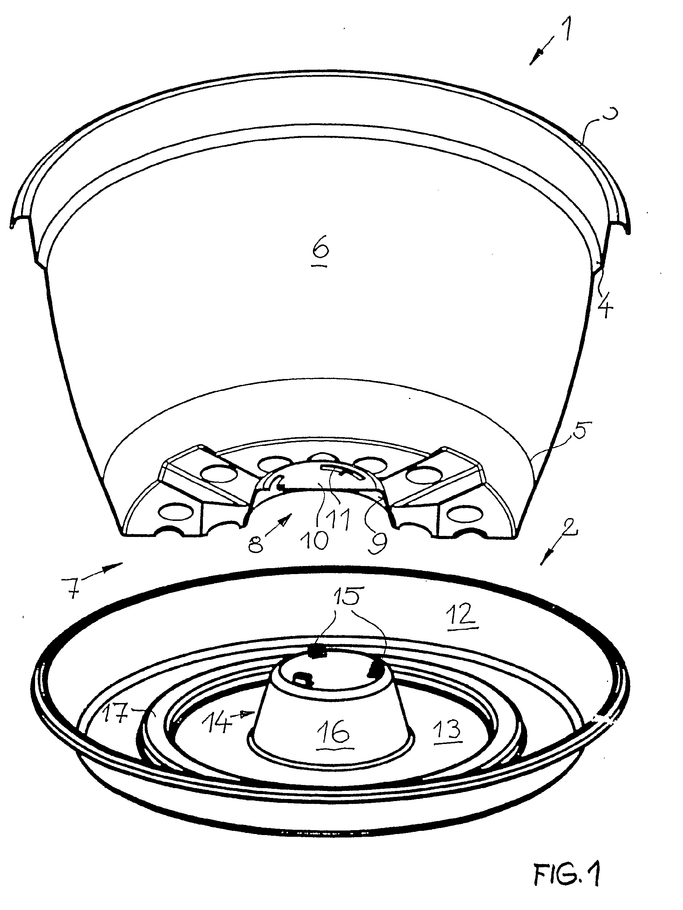

In Fig. 1 ist mit 1 ein Topf bezeichnet, der in der Zeichnung aus Darstellungsgründen halbiert wiedergegeben ist, um Einblicke in das Innere des Topfes und insbesondere den Bodenbereich zu geben. Mit 2 ist ein mit dem Topf 1 zu verbindender Untersetzer bezeichnet. Der Topf 1 ist beispielsweise im Spritzgußverfahren hergestellt und weist oberseitig einen insbesondere zur Versteifung ausgelegten Rand 3 und zwei Absätze 4 und 5 an einer konischen Seitenwand 6 sowie einen stark profilierten Bodenbereich 7 auf, der mit Löchern und Rippen auf eine gute Entwässerung und ggf. auch ("Ebbe und Flut"?)Bewässerung ausgelegt ist.

Abweichend von herkömmlichen Pflanztöpfen dieser Art weist der Topf 1 in einem mittleren Bodenbereich einen kegelstumpfförmigen Dom 8 auf, dessen keglige Seitenwandungen als Führungsflächen 9 dienen und dessen Stirnfläche 10 mit besonders geformten Löchern 11 für einen Kupplungseingriff ausgestaltet ist.

Der Untersetzer 2 zeigt sich hier in einer flach-stumpfkegligen Grundform mit umlaufenden Rand 12 und einem flachen Boden 13, demgegenüber ein zentraler Dom 14 mit Haken 15 als Kupplungselementen hervorspringt, während ein Kegelmantel 16 als Führungsfläche dient, die mit der inneren Führungsfläche 9 des Doms 8 am Topf 1 zusammenwirkt.

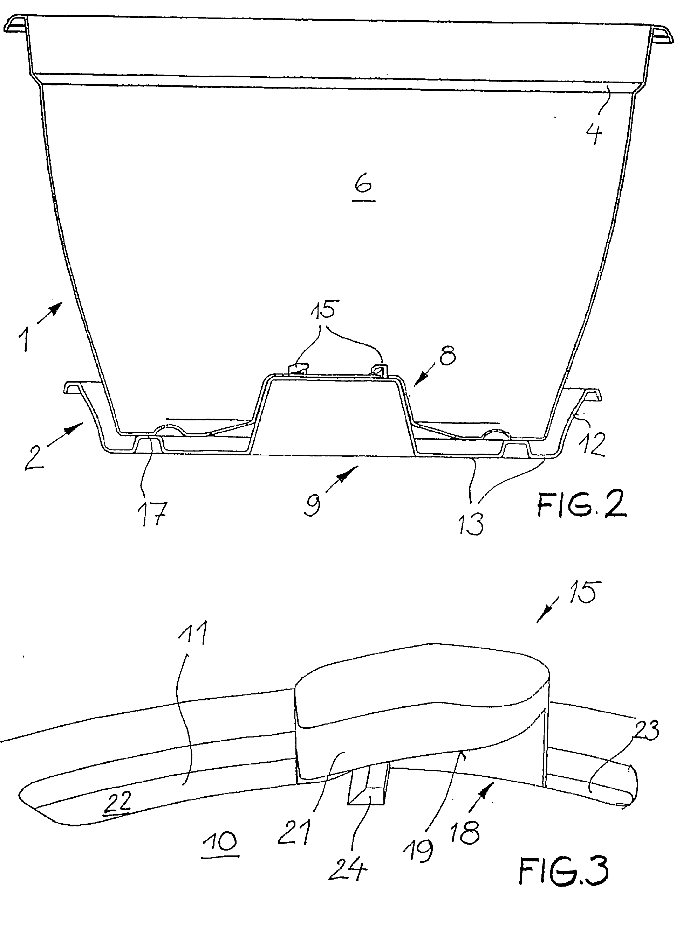

Gegenüber dem flachen Boden 13 springt nach oben weiterhin eine umlaufende Hohlrippe 17 vor, die beim Ineinanderstapeln der Untersetzer für den Transport die Distanzierung bestimmt. Die Hohlrippe 17 dient weiterhin als Distanzierelement gegenüber dem Topf 1 im angekuppelten Zustand, wobei sie gemäß Fig. 2 in einem randnahen Bereich unten am Boden 7 des Topfes 1 anliegt und Topf 1 und Untersetzer 2 zueinander fixiert.

Wie Fig. 2 weiterhin zeigt, liegen die Führungsflächen im gekuppelten Zustand aneinander an. Sie vereinfachen also nicht nur die Handhabung mit einem Zusammenstecken ohne besondere Aufmerksamkeit und ohne besonderes Probieren, sie stützen sich auch aneinander ab und erzielen damit eine wechselseitige Aussteifung.

In der vergrößerten Schrägansicht gemäß Fig. 3 ist ein Bereich der Stirnfläche 10 des Doms 8 im Topf 1 mit einem der drei Löcher oder Schlitze 11 mit einem von unten hindurchgelangten Haken 15 zu sehen, der sich auf halbem Weg zwischen einer Durchsteckposition und einer Verrastungsposition am rechten Ende des Schlitzes 11 befindet. Der Haken 15 hat auf seiner zur Mitte der Stirnfläche 10 hin gelegenen Seite eine Ausnehmung als Hakenmaul 18 mit einer darüber liegenden Hakenschulter 19 unter einem gegenüber einem Hakenschaft 20 verbreiterten Kopf 21.

Der Schlitz 11 ist in seinem in der Darstellung links zu sehenden Durchsteckbereich 22 zumindest etwas breiter als der Kopf 21, während er in einem Verhakungsbereich 23 rechts etwas breiter als der Hakenschaft 20, aber schmaler als der Hakenkopf 21 ist. Dies ermöglicht eine übliche, bajonettartige Kupplungsverbindung. Um die Kupplungsbewegung zu erleichtern, ist die Hakenschulter 19 schräg - aufgleitend - ausgebildet, d.h. rechts und in Bewegungsrichtung vorn höherliegend als links, so daß sie ohne festen Andruck einzukuppeln ist. Bei der Kupplungsbewegung läuft der Haken 15 über ein schwellenartiges Rastelement 24 mit einer angeschrägten linken Vorderkante und einer steilen rechten Rückkante, so daß der eingerastete Haken sich nicht lösen kann. Insbesondere ist dafür zu sorgen, daß der Druck einer wuchernden Bewurzelung, die sich auch im Kreis bewegen könnte, den Untersetzer nicht wieder auskuppelt.

Es versteht sich, daß eine Verrastung zu diesem Zweck auf verschiedene Weise, beispielsweise auch durch eine vorzugsweise beidseitige Sägezahnprofilierung der aneinanderliegenden Flächen von Haken 15 und Stirnseite 10 erfolgen kann. Selbstverständlich könnte die vorderseitige Schrägfläche des Rastelementes 24 tiefer bis in den erweiterten Bereich des Schlitzes 11 hineinlaufen. Darüber hinaus kann die Rastposition des Hakens 15 rechts von dem Rastelement 24 so gestaltet sein, daß die Schulterfläche 19 eine großflächige Auflage findet.

Mit einer kugelförmigen Raste vorgegebener Höhe läßt sich eine zwar grundsätzlich lösbare, aber ausreichend schwergängige und damit gegen Lösen gesicherte Kupplung gestalten.

Für eine solche Verhakung stehen je nach den Einzelbedingungen der Topfgestaltung, der Formgebungsmöglichkeit und insbesondere der Entformung durchaus verschiedene Alternativen offen. Ohne weiteres kann ein Hakenmaul beidseitig ausgebildet sein, so daß der Schlitz sich von einer Durchstecköffnung beidseitig verengt. Das Hakenmaul kann auch auf die radial äußere Seite gelegt werden, um Belastungen auf kurzem Wege in die Schrägflächen des Doms 8 einzutragen. In weiterer Ausgestaltung kann vorgesehen werden, die Verankerungslöcher im Topf oberseitig zu überdachen oder teilweise abzudecken, um einen Verschluß durch Wurzelwerk zu vermeiden.

Ein sehr schmaler Haken - ohne verbreiterten Hakenkopf - ist auch im Zusammenwirken mit einem sehr schmalen Schlitz möglich, indem das Hakenmaul in Kupplungsrichtung nach vorn gelegt wird, so daß der Haken das Ende des Schlitzes übergreift. Die Gestaltung ist auch keineswegs darauf festgelegt, daß die Haken an der Oberseite des Untersetzer-Doms 14 angeordnet sind. Eine Umkehrung mit Haken an der Unterseite des Topf-Doms 8 ist ohne weiteres möglich. Bei einem Untersetzer-Dom 14, der zumindest so hoch wie der Rand 12 ausgebildet ist, sind in der Stirnfläche unbedenklich Verhakungsöffnungen vorzusehen, ohne daß der Austritt von Wasser an dieser Stelle zu bedenken wäre.

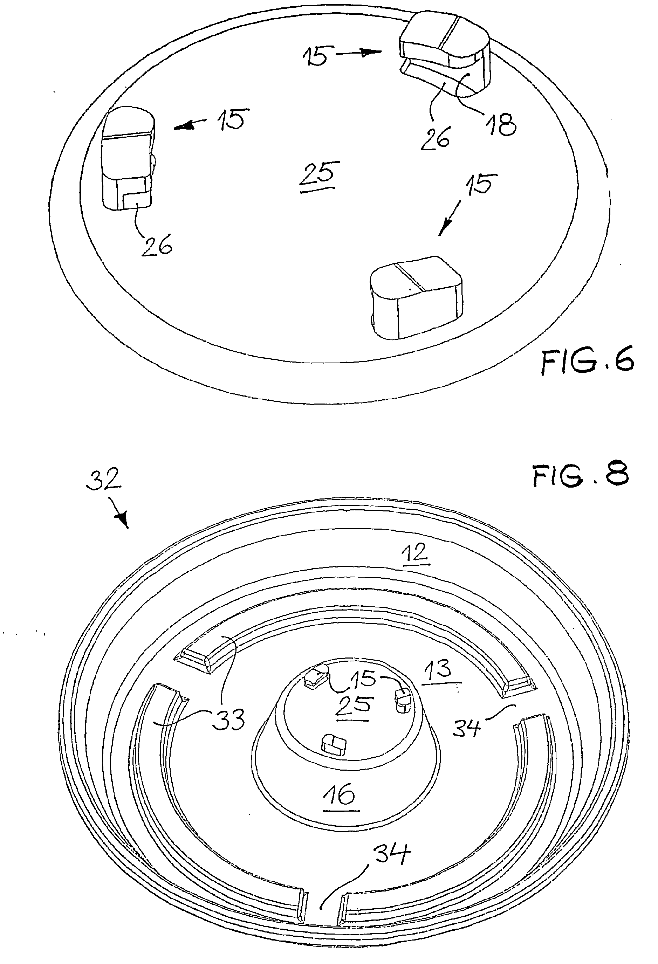

Ohnehin kann es wie im vorliegenden Fall naheliegen, auch im Hakenbereich Wanddurchbrechungen vorzusehen. In Fig. 6 ist eine Stirnfläche 25 des Doms 14 des Untersetzers 2 mit den drei bereits erwähnten Haken 15 zu sehen, die randseitig gleichmäßig am Umfang verteilt sind - wie die Schlitze 11 im Dom 8 des Topfes. Unterhalb des jeweiligen Hakenmauls 18 weist die Stirnfläche 25 eine Ausnehmung 26 auf, die einer leichteren Entformung des Untersetzers aus seiner Spritzgußform dient. Das Werkzeug für den Untersetzer greift von unten durch den Bereich der Stirnfläche 25 bis in den Bereich des Hakenmauls durch und formt dort die Hakenschulter 19 ab. Dies ermöglicht es nach der Formgebung auch, das Werkstück in axialer Richtung quer zur Stirnfläche 25 auszuwerfen, während eine Entformung des Hakens bei geschlossener Stirnfläche 25 eine Drehbewegung zum Entformen voraussetzen würde.

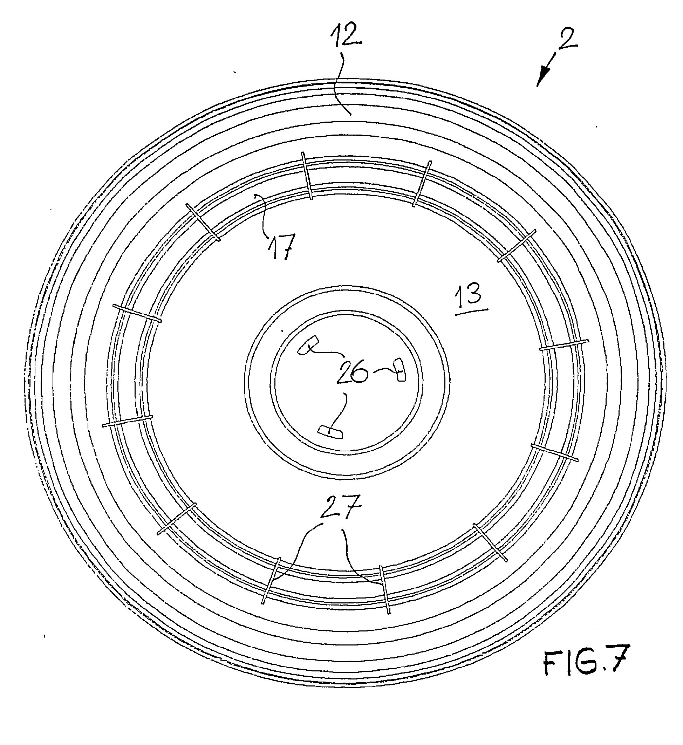

In Fig. 7 sind diese Ausnehmungen 26 von unten zu sehen. Weiterhin ist der Bereich der Hohlrippe 17 in der Unteransicht zu erkennen, dessen ringförmige Hohlform in kurzen Abständen durch Stege 27 unterbrochen ist, die den Querschnitt zumindest weitgehend versperren. Diese Stege vervollständigen die bereits erwähnte Distanzierfunktion der Hohlrippe 17, indem sie beim Stapeln das Eindringen der Hohlrippen ineinander verhindern und damit einen unbestimmten Stapelabstand und eine Verklemmungsgefahr ausschließen.

Eine alternative Ausgestaltung eines Untersetzers 32 gemäß Fig. 8 ergibt sich daraus, daß als Distanzierelement nicht eine umlaufende Hohlrippe, sondern Stücke von Hohlrippenabschnitten 33 vorgesehen sind. Dazwischenliegende Unterbrechungen 34 ermöglichen einen Wasseraustausch zwischen dem inneren und dem äußeren Bodenbereich beidseits der Distanzierelemente 33 und ggf. auch einen zusätzlichen Durchwurzelungsraum. Es versteht sich, daß auch diese Ringabschnitte 33 auf der Unterseite gegen ein Verklemmen beim Stapeln gesichert werden müssen, wenn sie entsprechend der neueren dünnwandigen Formgebung auf der Unterseite hohl ausgebildet sind. Dabei kann in jedem Ringabschnitt ein Quersteg oder deren wenige zur Absicherung ausreichen. Die Ringabschnitte können auch durch einen Kreis oder ein Raster von Hohlnoppen ersetzt werden, die dann dem gleichen Zweck dienen.

Es versteht sich, daß die Kupplungselemente nicht zwangsläufig mit den Zentrierelementen zu verbinden sind. Wenn man beispielsweise Zentrierelemente an Topf und Untersetzer vorsieht wie hier die beiden mittigen Dome, können Kupplungselemente weiter zum Rand hin angeordnet werden, um in der Grundfläche verteilte Fixierungen zu erhalten. Beispielsweise können Distanzelemente der beschriebenen Art mit Hakenelementen versehen sein, die in Löchern am Topfboden eingreifen.

## Patentansprüche

1. Pflanzenbehälter mit einem Topf (1) und einem Untersetzer (2) aus Kunststoff, wobei der Untersetzer (2) mit dem Topf (1) unverlierbar über Kupplungseinrichtungen mit Haken, die aufgrund einer Rotationsbewegung in Eingriff gelangen, miteinander zu verbinden ist, und wobei die Kupplungseinrichtungen jeweils in mittleren Bodenbereichen mit kegelig zulaufenden Führungsflächen (9,16) angeordnet sind, **dadurch gekennzeichnet, dass** der Topf unterseitig mit Löchern versehen ist und der Untersetzer (2) als Wasserschale unterseitig geschlossen ausgebildet ist und dass die Führungsflächen (9,16) an kegelstumpfförmigen Domen (8,14) mit Stirnflächen (10,25) an Topf (1) und Untersetzer (2) ausgebildet sind, wobei der Dom (14) des Untersetzers (2) nach oben vorsteht und die Haken (15) oberseitig an seiner Stirnfläche (25) aufweist, während in der Stirnfläche (10) des Doms (8) des Topfes (1) Wandlöcher (11) ausgebildet sind, in denen die Haken (15) bei gegenseitiger Drehung von Topf (1) und Untersetzer (2) hinein und in Kupplungseingriff gelangen.

2. Pflanzenbehälter nach Anspruch 1, **dadurch gekennzeichnet, dass** die Haken (15) zumindest einseitig ein in radialer Richtung weisendes Hakenmaul (18) aufweisen und dass die Löcher (11) schlüssellochförmig mit sich in Drehrichtung verengender Breite ausgebildet sind.

3. Pflanzenbehälter nach Anspruch 1, oder 2, **dadurch gekennzeichnet, dass** die Kupplungselemente durch Rastelemente (24) gesichert sind.

4. Pflanzenbehälter nach einem der Ansprüche 1 bis 3, **dadurch gekennzeichnet, dass** die Löcher (11) zumindest teilweise überdacht ausgebildet sind.

5. Pflanzenbehälter nach einem der Ansprüche 1 bis 4, **dadurch gekennzeichnet,** das der Dom (14) des Untersetzers (2) nach oben über einen Rand (12) des Untersetzers (2) aufragt.

6. Pflanzenbehälter nach einem der Ansprüche 1 bis 5, **dadurch gekennzeichnet, dass** der Untersetzer (2) mit zumindest einem Distanzelement (17) gegenüber dem Topf (1) versehen ist.

7. Pflanzenbehälter nach Anspruch 6, **dadurch gekennzeichnet, dass** das Distanzelement (17) ringförmig im Untersetzer (2) ausgebildet ist.

8. Pflanzenbehälter nach Anspruch 7, **dadurch gekennzeichnet, dass** das Distanzelement aus einer unterbrochenen Reihe von Ringabschnitten (33) besteht.

9. Pflanzenbehälter nach Anspruch 7 oder 8, **dadurch gekennzeichnet, dass** das Distanzelement (33) in einer unterseitig offenen Hohlrippe besteht, deren Hohlraum durch zumindest einen Steg (Unterbrechungen 34) unterteilt ist.

## Claims

1. Plant container comprising a pot (1) and a saucer (2) made of plastics material, the saucer (2) being intended to be non-detachably connected to the pot (1) by coupling devices having hooks which become engaged as a result of a rotational movement, and each coupling device being arranged in a central base region having conically tapering guide surfaces (9, 16), **characterised in that** the underside of the pot is provided with holes and the saucer (2) is in the form of a water dish which is closed at the bottom, and **in that** the guide surfaces (9, 16) are formed on the pot (1) and the saucer (2) on tapered domes (8, 14) having end faces (10, 25), the dome (14) of the saucer (2) protecting upwards and comprising the hooks (15) on the top of the end face (25) thereof, while holes (11) in the wall are formed in the end face (10) of the dome (8) of the pot (1), into which holes the hooks (15) reach and engage in a coupling manner when the pot (1) and the saucer (2) rotate relative to one another.

2. Plant container according to claim 1, **characterised in that** the hooks (15) comprise, at least on one side, a hook gap (18) that points in the radial direction, and **in that** the holes (11) are keyhole-shaped, having a width that narrows in the direction of rotation.

3. Plant container according to either claim 1 or claim 2, **characterised in that** the coupling elements are secured by catch elements (24).

4. Plant container according to any of claims 1 to 3, **characterised in that** the holes (11) are designed to be at least partially covered.

5. Plant container according to any of claims 1 to 4, **characterised in that** the dome (14) of the saucer (2) protrudes upwards above an edge (12) of the saucer (2).

6. Plant container according to any of claims 1 to 5, **characterised in that** the saucer (2) is provided with at least one spacer element (17) with respect to the pot (1).

7. Plant container according to claim 6, **characterised in that** the spacer element (17) is designed to be annular in the saucer (2).

8. Plant container according to claim 7, **characterised in that** the spacer element consists of a discontinuous series of annular portions (33).

9. Plant container according to either claim 7 or claim 8, **characterised in that** the spacer element (33) is a hollow rib which is open at the bottom, the hollow space of which is divided by at least one ridge (breaks 34).

## Revendications

1. Récipient pour plantes comprenant un pot (1) et une soucoupe (2) en matière plastique, la soucoupe (2) étant destinée à être reliée au pot (1) de façon imperdable pour le biais de moyens d'accouplement pourvus de crochets qui viennent en engagement par un mouvement de rotation, et les moyens d'accouplement étant adisposés chacun dans des zones centrales du fond pourvues de surfaces de guidage coniques (9, 16), **caractérisé en ce que** le pot est prévu du côté inférieur de trous et la soucoupe (2) est conformée en cuvette à eau en étant fermée du côté intérieur et **en ce que** les surfaces de guindage (9, 16) au niveau de dômes tronconiques (8, 14) sont conformés avec des faces d'extrémité (10, 25) au niveau du pot (1) et de la soucoupe (2), le dôme (14) de la soucoupe (2) fait saillir vers le haut et comportent les crochets (15) du côté supérieur au niveau de sa face frontale (25), tandis que la face frontale (10) du dôme (8) du pot (1) est pourvue de trous de paroi (11) dans lesquels les crochets (15) pénètre et s'engagent par accouplement lorsque le pot (1) et la soucoupe (2) sont tournés l'un par rapport à l'autre.

2. Récipient pour plantes selon la revendication 1, **caractérisé en ce que** les crochets (15) comportent au moins d'un côté un bec de crochet (18) dirige radialement et **en ce que** les trous (11) sont conformées en trou de serrure dont la largeur diminué dans le siens de notation.

3. Récipient pour plantes selon la revendication 1 ou 2, **caractérise en ce que** les éléments d'accouplement sont fixées par des éléments d'encliquetage (24).

4. Récipient pour plantes selon l'une des revendication 1 à 3, **caractérisé en ce que** les trous (11) sont conformés de façon à être au moins partiellement recouverts.

5. Récipient pour plantes selon l'une des revendications 1 à 4, **caractérisé en ce que** le dôme (14) de la soucoupe (2) se dresse vers le haut au-delà du bord (12) de la soucoupe (2).

6. Récipient pour plantes selon l'une des revendication 1 à 5, **caractérisé en ce que** la soucoupe (2) est pourvu d'au moins un élément d'écartement (17) opposé au pot (1).

7. Récipient pour plantes selon la revendication 6, **caractérisé en ce que** l'élément d'écartement (17) est conformé annulairement dans la soucoupe (2).

8. Récipient pour plantes selon la revendication 7, **caractérisé en ce que** l'élément d'écartement est constitué d'une série discontinue de parties annulaires (33).

9. Récipient pour plantes selon la revendication 7 ou 8, **caractérisé en ce que** l'élément d'écartement (33) consiste en une arête creuse qui est ouverte du côté inférieur et dont la cavité est divisée par au moins une nervure (interruptions 34).
